# EUROPÄISCHE PATENTANMELDUNG

(11) **EP 1 475 800 A1**
(43) Veröffentlichungstag der Anmeldung: **10.11.2004**
(21) Anmeldenummer: 04010024.0
(22) Anmeldetag: 28.04.2004
(51) Int. Cl.: G11B 20/18, G11B 27/36, G11B 7/00

(54) **Einrichtung zum Auslesen und/oder Prüfen von in Drehbewegung versetzten Matrizen oder optischen Speichermedien**

(30) Priorität: 09.05.2003 AT 7142003
(71) Anmelder: DaTARIUS Technologies GmbH, 6600 Reutte (AT)
(72) Erfinder: Hausberger, Peter, 6240 Radfeld 150 (AT); Pohl, Peter, 6491 Mils bei Imst (AT)
(74) Vertreter: Torggler, Paul N.

(57) **Zusammenfassung**

Einrichtung zum Auslesen und/oder Prüfen von in Drehbewegung versetzten Matrizen oder optischen Speichermedien (2), mit einem opto-elektronischen Abtastsystem (1), einer elektronischen Steuereinrichtung (18) für das opto-elektronische Abtastsystem (1), einer Verstärkereinrichtung (7) zum Verstärken der aus dem opto-elektronischen Abtastsystem (1) stammenden HF-Signale, einer Dekodereinrichtung (10) zum Dekodieren von verstärkten HF-Signalen, und einer gegebenenfalls vorhandenen Signalaufbereitungseinrichtung (11) zum Aufbereiten von verstärkten HF-Signalen für eine Mess- und Auswerteinrichtung (19), wobei zumindest die lösbar mit dem opto-elektronischen Abtastsystem (1) verbindbare Verstärkereinrichtung (7) und die Dekodereinrichtung (10) als gesonderte Module (6, 9) ausgebildet sind, die vorzugsweise über Steckverbinder (17'b) und/oder Verbindungsleitungen (25), lösbar miteinander verbindbar sind.

## Beschreibung

Die Erfindung betrifft eine Einrichtung zum Auslesen und/oder Prüfen von in Drehbewegung versetzten Matrizen oder optischen Speichermedien, mit einem opto-elektronischen Abtastsystem, einer elektronischen Steuereinrichtung für das opto-elektronische Abtastsystem, einer Verstärkereinrichtung zum Verstärken der aus dem opto-elektronischen Abtastsystem stammenden HF-Signale, einer Dekodereinrichtung zum Dekodieren von verstärkten HF-Signalen, und einer gegebenenfalls vorhandenen Signalaufbereitungseinrichtung zum Aufbereiten von verstärkten HF-Signalen für eine Mess- und Auswerteinrichtung.

Für die Vervielfältigung von optischen Medien (wie Compact Discs (kurz CD), CD-Rom, CD-XA, CD-I, CD-R, CD-RW und anderen auf dem CD-Format basierenden Medien, so wie der Digital Versatile Discs (kurz DVD), DVD-ROM, DVD-R, DVD-RW, DVD+R, DVD+FW und anderen auf dem DVD-Format basierenden Medien, so wie BLU-Ray Medien werden sogenannte "Master, "Väter", "Mütter", "Söhne" oder "Matrizen" (im Folgenden kurz als "Matrizen" bezeichnet) verwendet. Diese Matrizen sind Teile aus Metall oder Glas oder aus Kunststoff, welche mittels Belichtung, Ätzung, Plasma-Ätzung, Metall-Bedampfung im Vakuum, partieller Verdampfung oder elektrochemisch (galvanisch) hergestellt und vervielfältigt werden. Diese wie auch die davon gefertigten End-Produkte (optische Medien, kurz Replicas genannt) enthalten mechanische Strukturen ("Bits"), welche entweder bereits die auszulesende Information selbst darstellen (bei den vorbespielten Ausführungen dieser Medien, den Replicas), oder aber Führungs- oder Synchronisationsinformation für einen späteren Schreibvorgang sind (bei den einmal oder mehrmals beschreibbaren Ausführungen dieser Medien, wie z.B. CD-R oder DVD-R).

Diese Strukturen (Bits) werden optisch ausgelesen, wobei die Auslesung durch Modulation eines reflektierten Laserstrahles erfolgt. Die Modulation erfolgt beispielsweise durch Reflexion des Laserstrahles an einer Grenzfläche, durch Interferenz an verschiedenen Ebenen der Strukturen, durch Streuung an den Strukturen und durch Doppelbrechung. Die aus diesen Strukturen (Daten) abgeleiteten elektrischen Signale, Information und Messwerte, werden im Folgenden auch als "Signale" bezeichnet. Zur Einhaltung von internationalen Qualitätsnormen sind für die Strukturen und die abgeleiteten Signale auf dem Endprodukt (der Replica) teilweise Grenzwerte spezifiziert.

Die qualitätsrelevanten Eigenschaften der Medien sind festgelegt in den einschlägigen Spezifikationen, beispielsweise

| | |
|---|---|
| RED BOOK | für CD-Audio |
| ORANGE BOOK | für CD-R/RW |
| YELLOW BOOK | für CD-ROM |
| SCRLET BOOK | für SACD-Audio |
| DVD BOOK | für DVD-Audio |
| DVD BOOK | für DVD-ROM |
| DVD BOOK | für DVD-R/RW |
| DVD+R/RW | für DVD+R/RW |

In diesen einschlägigen Spezifikationen sind neben den einzelnen Messparametern auch die geforderten optischen Eigenschaften des Messkopfes beschrieben. Daher ist zu unterscheiden zwischen spezifikationskonformen Optiken und sogenannten Consumer-Optiken, wie sie in marktüblichen Heimgeräten Verwendung finden.

Spezifikationskonforme DVD-Laufwerke werden derzeit weltweit nur von wenigen Herstellern angeboten:

Spezifikationskonforme CD-Laufwerke sind nicht mehr verfügbar. Daher haben sich alle Mess- und Prüfsystem-Hersteller weltweit schon vor Jahren ein entsprechendes Lager an CD-Laufwerken angelegt. Beziehungsweise werden immer vermehrt diverse Consuper-Optiken in Mess- und Prüfsystemen für CD eingesetzt.

Um mit Consumer-Laufwerken annäherend Messergebnisse wie mit spezifikationskonformen Laufwerken erreichen zu können, ist ein erheblicher technischer Aufwand erforderlich. Die Vergleichbarkeit ist von Signal zu Signal verschieden.

Alle derzeit verfügbaren Einrichtungen zur Prüfung von Matrizen und optischen Medien sind als Laufwerk realisiert, wobei die Steuereinheit, Messeinheit und das opto-elektronische Abtastsystem eine Einheit bilden. Die einzelnen Funktionen der Steuer- bzw. Messeinheit lassen sich nicht klar trennen.

Die Ausgangssignale (Mess-Signale) vom opto-elektronischen Abtastsystem sind kleine hochfrequente Ströme, die entsprechend empfindlich auf Störungen reagieren. Daher wird die Steuereinheit und die Messeinheit möglichst kompakt zusammengefasst, um kürzeste Signalwege und Signallaufzeiten erreichen zu können.

Damit ist jedes Laufwerk speziell auf die Verwendung einer bestimmten opto-elektronischen Abtasteinheit hin optimiert. Wird bzw. muss die opto-elektronische Abtasteinheit durch einen anderen Typ (zum Lesen eines anderen optischen Formats) ersetzt, heißt das, dass ein komplett neues Laufwerk entsteht bzw. entwickelt werden muss.

Für den Hersteller von optischen Medien sind die einschlägig gültigen Spezifikationen ausschlaggebend. Diese garantieren die Spielbarkeit eines optischen Mediums auf allen weltweit verfügbaren Abspielgeräten, wie CD-Audio Spielern oder CD-ROM Laufwerken in Computern, die ebenfalls dieser Spezifikation entsprechen.

Es werden und können bestimmte Spezifikationen nicht an die immer letzten technischen Entwicklungen am Consumer-Markt angepasst werden (es kommen z.B. in Consumer-Spielern immer opto-elektronische Abtastsysteme zum Einsatz, die nicht den einschlägigen Spezifikationen entsprechen). Weiters muss die Prüfung der optischen Medien entsprechend der einschlägigen Spezifikationen meist in einfacher Abspielgeschwindigkeit (kurz 1x) erfolgt. Die Consumer-Spieler (vor allem Laufwerke für Computer, CD-ROM und DVD-ROM) verwenden wesentlich höhere Auslesegeschwindigkeiten (bei CD über 72x und bei DVD über 40x). Damit kann die Prüfung der optischen Medien nach den einschlägigen Spezifikationen nicht unbedingt mehr die Spielbarkeit des Mediums garantieren.

Daher werden immer vermehrter auch Consumer-Optiken für Mess- und Prüfsysteme eingesetzt, um gleichzeitig mit der Prüfung des Mediums auch die Spielbarkeit zu untersuchen.

Aufgabe der Erfindung ist es, eine Einrichtung der eingangs genannten Art zu schaffen, welche die oben angeführten Nachteile bestehender Verfahren und Vorrichtungen vermeidet und rasch zuverlässige Überprüfungen mit den unterschiedlichsten opto-elektronischen Abtastsystemen erlaubt. Erfindungsgemäß wird dies dadurch erreicht, dass zumindest die lösbar mit dem opto-elektronischen Abtastsystem verbindbare Verstärkereinrichtung und die Dekodereinrichtung als gesonderte Module ausgebildet sind, die vorzugsweise über Steckverbinder und/oder Verbindungsleitungen, lösbar miteinander verbindbar sind.

Der wesentliche Vorteil der Erfindung besteht darin, dass man bei einem Austausch des opto-elektronischen Abtastsystems gegen ein anderes nicht mehr die gesamte nachgeschaltete Elektronik mitaustauschen muss, sondern es im Allgemeinen genügt, alleine den Modul der Verstärkereinrichtung auszutauschen, der auch die Signalanpassung für die Nachfolgeelektronik, insbesondere eine Impedanzanpassung vornehmen kann. Die elektronische Steuereinrichtung für das opto-elektronische Abtastsystem kann auf dem Modul der Dekodereinrichtung angebracht sein. Um aber eine noch größere Variabilität im Hinblick auf den Ersatz bzw. Austausch von opto-elektronischen Abtastsystemen zu erzielen, ist es günstiger, auch die elektronische Steuereinrichtung bzw. wesentliche Komponenten davon auf dem Modul der Verstärkereinrichtung anzuordnen und dann gegebenenfalls bei einem Austausch oder Ersatz des opto-elektronischen Abtastsystems mitzutauschen. Damit kann jedenfalls der Modul der Dekodereinrichtung samt Mikrokontroller sowie gegebenenfalls weitere vorhandene Komponenten bestehen bleiben.

Zum reinen Abspielen reicht die Verstärkereinrichtung und die Dekodereinrichtung im Wesentlichen aus. Wenn man eine Prüfung von Matrizen bzw. anderen Prüflingen, wie CDs oder DVDs vornehmen will, ist es günstig, weiters eine Signalaufbereitungseinrichtung, vorzugsweise ebenfalls als lösbar anschließbarer Modul vorzusehen. Diese Signalaufbereitungseinrichtung empfängt dann die Daten aus dem opto-elektronischen Abtastsystem ebenfalls über die genannte Verstärkereinrichtung und kommuniziert ihrerseits mit einer oder mehrerer standardisierter Messkarten.

Die übergeordnete Steuerung des gesamten Systems kann von einem zentralen Modul mit einer Prozessoreinrichtung (beispielsweise einem Single-Chip-PC) erfolgen. Dieser Modul steht dann günstigerweise über ein frei programmierbares Interface mit der Dekodereinrichtung einerseits und der Signalaufbereitungseinrichtung für die Messkarte(n) in Kommunikation. Günstigerweise weist dieser Modul mit der Prozessoreinrichtung auch eine Kommunikationsschnittstelle, insbesondere eine LAN-Schnittstelle für ein lokales Netzwerk, beispielsweise Ehternet auf.

Die bevorzugten vier Module für die Verstärkereinrichtung, Dekodereinrichtung, Prozessoreinrichtung und Signalaufbereitungseinrichtung sind günstigerweise so angeordnet, dass sie im rechten Winkel entlang der Seiten eines gedachten Quaders liegen. Dies erlaubt eine gute Wärmeabfuhr durch eine gezielt hervorgerufene Luftströmung und damit eine geringe Wärmebeeinträchtigung des opto-elektronischen Abtastsystems, sowie eine in der Draufsicht schmale Bauweise.

Weitere Vorteile und Einzelheiten der Erfindung werden anhand der nachfolgenden Figurenbeschreibung näher erläutert. Es zeigen:
- Fig. 1: schematisch ein Ausführungsbeispiel nach dem Stand der Technik,
- Fig. 2 und 3: alternative Ausführungsbeispiele einer erfindungsgemäßen Einrichtung, jeweils in einem Blockschaltbild, und
- Fig. 4: schematisch die Anordnung der Leiterplatinen bzw. einzelnen Module der Erfindung.

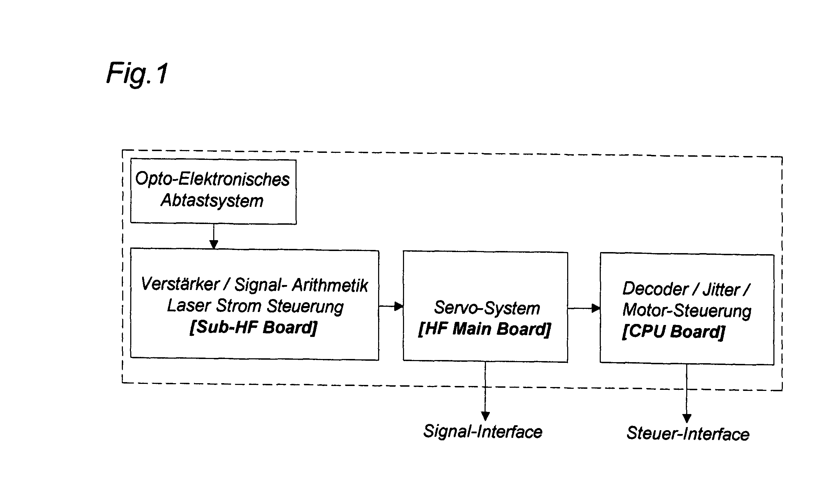

Bei dem in Fig. 1 dargestellten Stand der Technik sind die wesentlichen elektronischen Komponenten auf einer einzigen Platine untergebracht. Bei Austausch des opto-elektronischen Abtastsystems muss daher jeweils die gesamte Platine mit allen elektronischen Komponenten getauscht werden.

Um dies zu vermeiden, sieht die Erfindung eine modulare Bauweise vor, wobei die einzelnen Module vorzugsweise aus bestückten Leiterplatten bestehen, die günstigerweise über Steckverbindungen direkt und/oder über dazwischenliegende, vorzugsweise flexible Leitungen miteinander verbindbar sind.

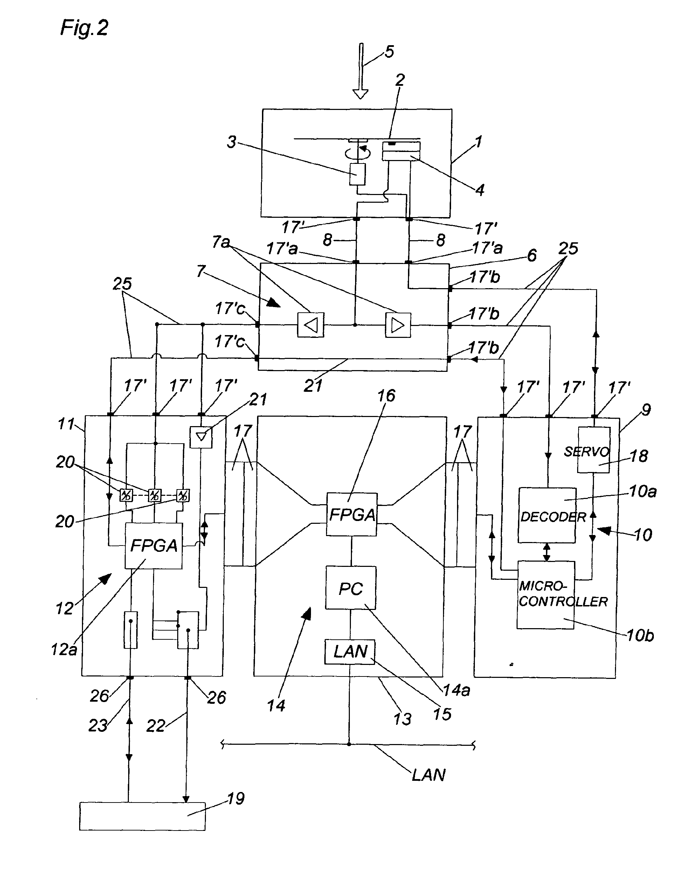

Unter Bezugnahme auf Fig. 2 ist mit der Bezugsziffer 1 das schematisch dargestellte opto-elektronische Abtastsystem bezeichnet. Es dient dazu, Daten aus einer Matrize bzw. einem Prüfling 2 auszulesen, wobei die empfindlichen hochfrequenten Ausgangssignale an die Nachfolgeelektronik weitergeleitet werden. Das opto-elektronische Abtastsystem weist einen schematisch dargestellten Antrieb 3 sowie einen meist mit einem Laser bestückten Messkopf 4 auf, dessen Leseteil bezüglich der Matrize oder des Prüflings 2 radial verschiebbar ist. Beim erfindungsgemäßen System ist die Matrize von oben in Pfeilrichtung 5 einlegbar (Top-Lader). Damit ist eine einfache Zugänglichkeit gegeben. Außerdem erlaubt diese Top-Lader-Version auf einfache Weise den Einbau in eine Fertigungsstrasse für CDs oder DVDs, um diese "Inline" zu testen.

Weiters weist die erfindungsgemäße Einrichtung einen Modul 6 mit einer Verstärkereinrichtung 7 auf, der beim dargestellten Ausführungsbeispiel aus zwei Verstärkern 7a besteht, die auch andere Signalanpassungsfunktionen übernehmen können, beispielsweise eine Impedanzanpassung für die Nachfolgeelektronik.

Diese Verstärkereinrichtung ist über möglichst kurze Verbindungsleitungen 8 und Stecker 17', 17'a mit dem elektronischen Abtastsystem 1 verbunden. Die Ausgänge der Verstärker 7a führen einerseits zum Modul 9 der Dekodereinrichtung 10 und andererseits zum Modul 11 der Signalaufbereitungseinrichtung 12 (Anschlüsse 17'c, 17'b).

Die Dekodereinrichtung 10 umfasst im wesentlichen einen Dekoder 10a und einen Mikrocontroller 10b, der in Echtzeit arbeitet. Der Dekoder 10a kann vorteilhaft als einsteckbarer Bauteil auf der Leiterplatte ausgebildet sein. Er dient dazu, die verstärkten hochfrequenten Ausgangssignale der elektronischen Abtasteinrichtung in digitale Daten umzuwandeln, und dabei eine Analyse in an sich bekannter Weise vorzunehmen, beispielsweise die Adresse von Datenblöcken herauszulesen, die Daten selbst in digitaler Form weiterzugeben, Fehlersignale zu erzeugen bzw. auch Fehler zu korrigieren.

Die übergeordnete Steuerung übernimmt der Modul 13 mit der Prozessoreinrichtung 14, die im wesentlichen einen Single-Chip-PC 14a umfasst. Dieser besteht über ein Interface bzw. eine Schnittstelle 15 mit dem lokalen Netzwerk LAN (beispielsweise Internet in Kommunikation. Der PC 14a braucht nicht in Echtzeit zu arbeiten. Er steht über ein freiprogrammierbares Interface (FPGA) 16 einerseits mit dem Modul 8 der Dekodereinrichtung 10 und andererseits mit dem Modul 11 der Signalaufbereitungeinrichtung 12 in Kommunikation, wobei hier die Verbindung entweder - wie dargestellt - über direkte Steckkontakte 17 - oder wie weiter oben in Fig. 2 dargestellt - über Stecker und flexible Leitungen erfolgen kann.

Soll eine CD oder DVD 2 lediglich abgespielt werden, so kann der Modul für die Messwertaufbereichtung 11 weggelassen werden. Die dekodierten Daten werden dann vom Mikorcontroller über das FPGA 16 dem PC 14a und die LAN-Schnittstelle 15 ausgegeben.

Die Steuerung der opto-elektronischen Abtasteinheit, insbesondere des Antriebsmotors 3 und des eigentlichen opto-elektronischen Lesekopfs 4 (insbesondere von dessen Lage) übernimmt die Steuereinrichtung 18, die bei dem in Fig. 2 dargestellten Ausführungsbeispiel auf der Leiterplatte 9 des Dekoders 10a untergebracht, also dem Dekoder-Modul zugeordnet ist. Die Steuerdatenübertragung erfolgt über die Leitungen 8 und 25. Diese sind beim dargestellten Ausführungsbeispiel durch den Verstärkermodul 6 durchgeschleift. Es könnte aber auch eine direkte parallel dazu geführte Leitung vorgesehen sein.

Sollen nun Matrizen bzw. Prüflinge (CDs oder DVDs 2) durch die erfindungsgemäße Einrichtung geprüft werden, müssen die relevanten Daten über die Anschlüsse 26 letztlich zu einer standardisierten Messkarte 19 gelangen. Um auch hier eine größtmögliche Flexibilität von einsetzbaren opto-elektronischen Abtastsystemen zu haben, ist eine Signalaufbereitungseinrichtung 12 vorgesehen, die als zentralen Bauteil ein freiprogrammierbares Interface (Field Programmable Gate Array) 12a enthält. Diesem Interface werden einerseits über eine Serie von analog Digitalwandlern 20 die verstärkten HF-Signale des opto-elektronischen Abtastsystems in digitaler Form zugeführt, andererseits kann der FPGA 12a auch digitale Daten aus dem Mikrocontroller 10b empfangen, wobei diese beim gezeigten Ausführungsbeispiel über eine Signalbrücke 21 im Modul 6 der Verstärkereinrichtung 7 geführt sind. Prinzipiell ist es auch möglich, Daten aus der Steuereinrichtung 18 dem FPGA zuzuführen (hier nicht gezeigt). Darüber hinaus können HF-Daten aus dem opto-elektronischen Abtastsystem über einen Verstärker 21 nochmals verstärkt werden, sodass letztlich über die Messdatenleitung 22 digitale und analoge Signale der Messkarte 19 zuführbar sind. Diese Messkarte 19 kann über eine Synchronisationsleitung 23 mit dem Modul 11 in Verbindung stehen.

An dieser Stelle soll erwähnt werden, dass die dargestellten Leitungen lediglich schematische Leitungen sind. Sie können auf die verschiedenste Art und Weise realisierte werde, beispielsweise als flexible Leitungen oder als Leiterbahnen auf Platinen. Auch stellen die einfach dargestellten Leitungen durchaus auch Mehrfachleitungen, beispielsweise im Sinne eines Flachbandkabels, dar. Außerdem ist der Einfachkeit halber die gesamte Stromversorgung der einzelnen Bauteile nicht dargestellt.

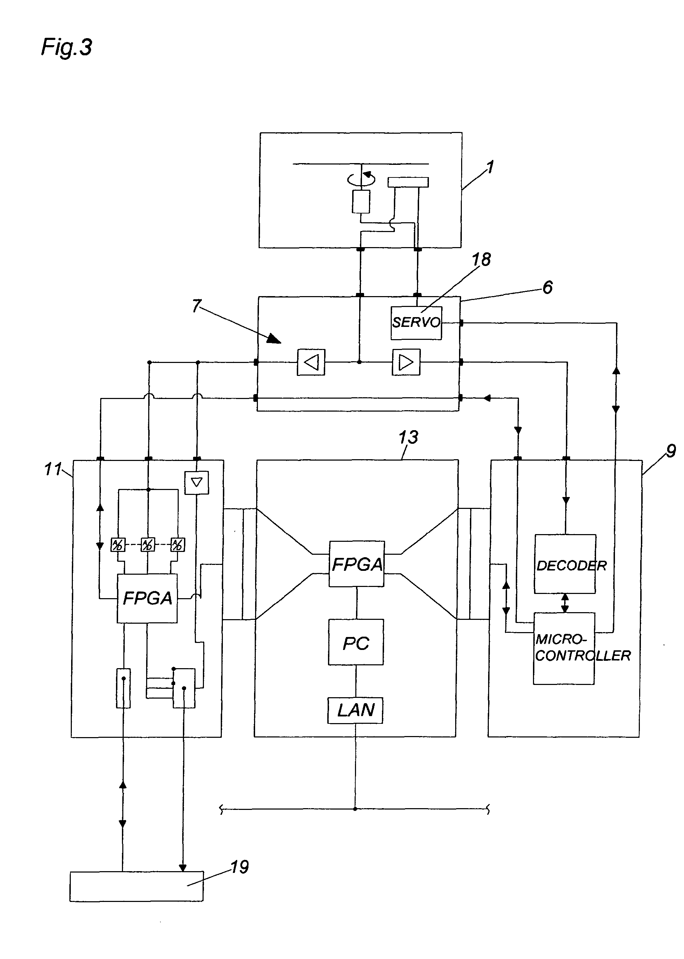

Bei dem in Fig. 3 dargestellten Ausführungsbeispiel sind das opto-elektronische Abtastsystem 1 sowie die Module 6, 9, 11 und 13 prinzipiell gleich aufgebaut wie in Fig. 2. Der wesentliche Unterschied besteht jedoch darin, dass bei dem Ausführungsbeispiel gemäß Fig. 3 die Steuereinrichtung 18 für das opto-elektronische Abtastsystem 1 auf dem Modul 6 der Verstärkereinrichtung 7 angeordnet ist. Damit wird eine noch höhere Flexibilität erzielt, weil man bei einem Austausch bzw. Ersatz des Laufwerkes 1 durch ein anderes lediglich den Modul 6 mittauschen muss. Die übrigen elektronischen Komponenten 9, 11 und 13 sowie die Messkarte 19 können gleich bleiben.

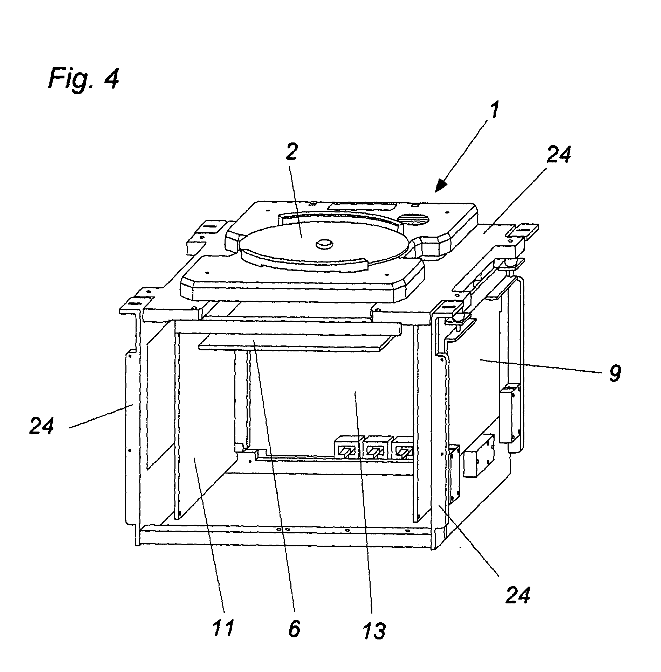

Die Fig. 4 zeigt eine günstige räumliche Anordnung der einzelnen Module bzw. Leiterplatten 6, 9, 11 und 13. Diese Leiterplatten bzw. Module sind mit elektronischen Bauelementen bestückt, welche beispielsweise in Fig. 2 im Blockschaltbild schematisch dargestellt sind.

Diese Bauelemente sowie Verbindungsleitungen sind der Übersichtlichkeit halber in der Fig. 4 nicht gezeigt. Die Bauelemente liegen günstigerweise - zumindest zum Großteil - an der nach außen weisenden Seite des gezeigten gedachten Würfels. Die Module bzw. Leiterplatten 9, 11, 13 sowie 6 sind aufeinander senkrecht angeordnet und in einer gemeinsamen Halterung (Metallrahmengebilde) 24 gehalten. Diese Halterung trägt an ihrer Oberseite auch noch das opto-elektronische Abtastsystem 1 für den Prüfling 2. Der Vorteil dieser Anordnung besteht in einer leichten Zugänglichkeit der einzelnen Leiterplatten bzw. Module sowie in einer verringerten thermischen Belastung für das opto-elektronische Abtastsystem 1, weil die elektronischen Bauteile der einzelnen Leiterplatten entfernt und seitlich versetzt angeordnet sind, womit bei einer Kühlluftführung von unten - im Gegensatz zu anderen bekannten Systemen - keine wesentliche Erwärmung des opto-elektronischen Abtastsystems erfolgt. Außerdem erlaubt die dreidimensionale "Quader-Anordnung" der Leiterplatten, bei der zumindest die Leiterplatten 9, 11 und 13 stehend angeordnet sind eine in der Draufsicht schmale Bauweise, was für einen Einsatz im Inlinebetrieb günstig ist. Dort spielt nämlich die etwas erhöhte Bauhöhe keine so wesentlich Rolle.

Die Erfindung ist selbstverständlich nicht auf die dargestellten Ausführungsbeispiele beschränkt - wesentlich ist der modulare Aufbau der Elektronik.

## Patentansprüche

1. Einrichtung zum Auslesen und/oder Prüfen von in Drehbewegung versetzten Matrizen oder optischen Speichermedien, mit einem opto-elektronischen Abtastsystem, einer elektronischen Steuereinrichtung für das opto-elektronische Abtastsystem, einer Verstärkereinrichtung zum Verstärken der aus dem opto-elektronischen Abtastsystem stammenden HF-Signale, einer Dekodereinrichtung zum Dekodieren von verstärkten HF-Signalen, und einer gegebenenfalls vorhandenen Signalaufbereitungseinrichtung zum Aufbereiten von verstärkten HF-Signalen für eine Mess- und Auswerteinrichtung, **dadurch gekennzeichnet, dass** zumindest die lösbar mit dem opto-elektronischen Abtastsystem (1) verbindbare Verstärkereinrichtung (7) und die Dekodereinrichtung (10) als gesonderte Module (6,9) ausgebildet sind, die vorzugsweise über Steckverbinder (17b) und/oder Verbindungsleitungen (25), lösbar miteinander verbindbar sind.

2. Einrichtung nach Anspruch 1, **dadurch gekennzeichnet, dass** die elektronische Steuereinrichtung (18) für das opto-elektronische Abtastsystem (1) im Wesentlichen auf dem die Verstärkereinrichtung (7) aufweisenden Modul (6) angeordnet ist.

3. Einrichtung nach Anspruch 1, **dadurch gekennzeichnet, dass** die elektronische Steuereinrichtung (18) für das opto-elektronische Abtastsystem (1) im wesentlichen auf dem die Dekodereinrichtung (10) aufweisenden Modul (9) angeordnet ist.

4. Einrichtung nach einem der Ansprüche 1 bis 3, **dadurch gekennzeichnet, dass** die Verstärkereinrichtung (7), die Dekodereinrichtung (10) und die Signalaufbereitungseinrichtung (12) jeweils als gesonderte Module (6, 9, 11) ausgebildet sind.

5. Einrichtung nach Anspruch 4, **dadurch gekennzeichnet, dass** der Modul (6) der Verstärkereinrichtung (7) zumindest einen ersten Anschluss (17'a) für das opto-elektronische Abtastsystem (1), zumindest einen zweiten Anschluss (17'b) für die Dekodereinrichtung (10) und einen dritten Anschluss (17'c) für die Signalaufbereitungseinrichtung aufweist.

6. Einrichtung nach einem der Ansprüche 1 bis 5, **dadurch gekennzeichnet, dass** ein weiterer Modul (13) mit einer Prozessoreinrichtung (14), vorzugsweise einem Single-Chip-PC (14a) vorgesehen ist, der lösbar mit zumindest einem der Module (9, 10) der Dekodereinrichtung (10) oder der Signalaufbereitungseinrichtung (12) lösbar verbindbar ist.

7. Einrichtung nach Anspruch 6, **dadurch gekennzeichnet, dass** der Prozessor-Modul (13) einen Anschluss (17) für die Dekodereinrichtung (10) und einen Anschluss (17) für die Signalaufbereitungseinrichtung (12) aufweist.

8. Einrichtung nach einem der Ansprüche 6 oder 7, **dadurch gekennzeichnet, dass** der Modul (6) der Verstärkereinrichtung (7) mit dem Modul (9) der Dekodereinrichtung (10) einerseits und mit dem Modul (11) der Signalaufbereitungseinrichtung (12) andererseits lösbar verbunden ist und der Modul (13) der Prozessoreinrichtung (14) ebenfalls mit dem Modul (9) der Dekodereinrichtung (10) und mit dem Modul (11) der Signalaufbereitungseinrichtung (12) verbunden ist.

9. Einrichtung nach einem der Ansprüche 1 bis 8, **dadurch gekennzeichnet, dass** die Module (12, 13) zumindest teilweise flexible programmierbare Interface-Einrichtungen (12a, 16), vorzugsweise Field Progammable Gate Arrays (FPGAs) zur Kommunikation mit anderen Modulen (13, 9) aufweisen.

10. Einrichtung nach einem der Ansprüche 1 bis 9, **dadurch gekennzeichnet, dass** der Modul (6) der Verstärkereinrichtung (7) zwei Verstärker (7a) aufweist, wobei der Ausgang des einen Verstärkers zum Anschluss (17'c) für die Signalaufbereitungseinrichtung (12) und der Ausgang des anderen Verstärkers zum Anschluss (17'b) für die Dekodereinrichtung (10) führt.

11. Einrichtung nach einem der Ansprüche 1 bis 10, **dadurch gekennzeichnet, dass** der Modul (6) der Verstärkereinrichtung (7) eine durchgehende Signalbrücke (21) zwischen zwei Anschlüssen (17'b, 17'c) aufweist, wobei der erste Anschluss vorzugsweise für die Dekodereinrichtung und der zweite Anschluss für die Signalaufbereitungseinrichtung vorgesehen ist.

12. Einrichtung nach einem der Ansprüche 1 bis 11, **dadurch gekennzeichnet, dass** die Dekodereinrichtung (10) einen in einer Halterung lösbar gehaltenen, vorzugsweise einsteckbaren Dekoderchip aufweist.

13. Einrichtung nach einem der Ansprüche 1 bis 12, **dadurch gekennzeichnet, dass** die Dekodereinrichtung (10) einen vorzugsweise echtzeitfähigen Mikrocontroller (10b) aufweist, der mit dem eigentlichen Dekoder (10a) , und vorzugsweise auch mit der Steuereinrichtung (18), der Prozessoreinrichtung (14) und über die Signalbrücke (21) des Moduls (6) der Verstärkereinrichtung (7) mit der Signalaufbereitungseinrichtung (12) in Verbindung steht.

14. Einrichtung nach einem der Ansprüche 1 bis 13, **dadurch gekennzeichnet, dass** der Prozessor-Modul (13) eine LAN-Schnittstelle (15), insbesondere eine Ehternet-Schnittstelle aufweist.

15. Einrichtung nach einem der Ansprüche 1 bis 14, **dadurch gekennzeichnet, dass** die Signalaufbereitungseinrichtung (12) mehrere parallele Analog-Digitalwandler (20) aufweist, deren Ausgänge einer frei programmierbaren Interface-Einrichtung (12a), vorzugsweise einem Field Progammable Gate Arrey (FPGA) zugeführt werden.

16. Einrichtung nach einem der Ansprüche 1 bis 15, **dadurch gekennzeichnet, dass** die Signalaufbereitungseinrichtung zumindest einen Anschluss zum lösbaren Anschluss einer externen Messkarte (19) aufweist.

17. Einrichtung nach einem der Ansprüche 1 bis 16, **dadurch gekennzeichnet, dass** die Module (6, 9, 11, 13) zumindest teilweise als bestückte Leiterplatten ausgeführt sind.

18. Einrichtung nach Anspruch 17, **dadurch gekennzeichnet, dass** die bestückten Leiterplatten (6, 9, 11, 13) lösbar mit einer gemeinsamen Halterung, vorzugsweise einem Metallrahmen (24), verbindbar sind.

19. Einrichtung zum Auslesen und/oder Prüfen von in Drehbewegung versetzten Matrizen oder optischen Speichermedien, mit einem opto-elektronischen Abtastsystem, einer elektronischen Steuereinrichtung für das opto-elektronische Abtastsystem, einer Verstärkereinrichtung zum Verstärken der aus dem opto-elektronischen Abtastsystem stammenden HF-Signale, einer Dekodereinrichtung zum Dekodieren von verstärkten HF-Signalen, und einer gegebenenfalls vorhandenen Signalaufbereitungseinrichtung zum Aufbereiten von verstärkten HF-Signalen für eine Mess- und Auswerteinrichtung, insbesondere nach einem der Ansprüche 17 oder 18, **dadurch gekennzeichnet, dass** die elektronischen Komponenten auf Leiterplatten angeordnet sind und die Leiterplatten, - vorzugsweise die Leiterplatte des Moduls (6) der Verstärkereinrichtung, die Leiterplatte (9) des Moduls der Dekodereinrichtung, die Leiterplatte (13) des Moduls der Prozessoreinrichtung und die Leiterplatte des Moduls der Signalaufbereitungseinrichtung - (11) zueinander in einem vorzugsweise rechten Winkel angeordnet sind.

20. Einrichtung nach Anspruch 19, **dadurch gekennzeichnet, dass** die Leiterplatten (6, 9, 11, 13) im wesentlichen entlang der Seiten eines gedachten Quaders, vorzugsweise Würfels angeordnet sind (Fig. 4).

21. Einrichtung nach Anspruch 20, **dadurch gekennzeichnet, dass** im Bereich der Deckfläche des gedachten Quaders, vorzugsweise Würfels, die Leiterplatte des Moduls : (6) der Verstärkereinrichtung (7) angeordnet ist, dass an der Vorder- oder Hinterseite des gedachten Quaders, vorzugsweise Würfels, die Leiterplatte (13) des Moduls der Prozessoreinrichtung (14) angeordnet ist und dass die Leiterplatten der Module (9, 11) der Signalaufbereitungseinrichtung (12) und der Dekodereinrichtung (10) an den Seitenflächen des gedachten Quaders, vorzugsweise Würfels, angeordnet sind bzw. diese bilden (Fig. 4).

22. Einrichtung nach einem der Ansprüche 1 bis 21, **dadurch gekennzeichnet, dass** das opto-elektronische Abtastsystem (1) oberhalb der Leiterplatte des Moduls (6) der Verstärkereinrichtung (7), vorzugsweise an einer gemeinsamen Halterung (24) für alle Leiterplatten der Module (6, 9, 11, 13), angeordnet ist (Fig. 4).
